# DEMANDE DE BREVET EUROPEEN

(11) **EP 0 993 782 A1**
(43) Date de publication de la demande: **19.04.2000**
(21) Numéro de dépôt: 98203453.0
(22) Date de dépôt: 16.10.1998
(51) Int. Cl.: A23L 1/221, C11B 9/02

(54) **Arômes volatils**

(71) Demandeur: SOCIETE DES PRODUITS NESTLE S.A., 1800 Vevey (CH)
(72) Inventeur: Cerny, Christoph, 8400 Winterthur (CH); Hart, Joseph Richard, 8604 Volketswil (CH)
(74) Mandataire: Vuille, Roman

(57) **Abrégé**

Concentré d'arômes volatils extrait de matière grasse, contenant par rapport à la quantité contenue dans la matière grasse de départ, au maximum 5% d'acides gras ayant une chaine carbonée supérieure ou égale à 14 carbones et au maximum 1% de péroxyde.

## Description

La présente invention a pour objet un concentré d'arômes volatils, un procédé de fabrication d'un tel concentré ainsi que l'utilisation de ce concentré pour la fabrication de produits alimentaires.

Il est connu d'isoler des arômes de la matière grasse.

Ainsi EP 463 660 décrit la préparation d'un mélange aromatique par oxydation douce d'acides gras et/ou de dérivés d'acides gras en présence d'antioxydants. De préférence, la matière grasse animale ou végétale utilisée est au préalable hydrolysée, de manière à obtenir un mélange oxydé contenant suffisament de composés aromatiques.

Pour isoler des arômes de matière grasse, il est également connu d'utiliser du CO₂ en conditions supercritiques. Mais pour obtenir un bon rendement dans un tel procédé d'isolation de composés aromatiques, d'autres composés de la matière grasse sont isolés, notamment des péroxydes, des acides gras libres à longue chaîne et du cholesterol. Or la présence d'acides gras à longue à chaîne, soit sous forme de glycerides ou soit sous forme libre contribue à la détérioration rapide des composés aromatiques lors d'un stockage prolongé.
Par ailleurs, le consommation de cholestérol présent dans la matière grasse animale est responsable d'effets malsains.

Ainsi K.W. Um et al. (J. Agric. Food Chem. - 40 ― p. 1641-1646 ― 1992) décrit un concentré d'arômes obtenu par une extraction au CO₂ en conditions supercritiques à partir de graisse de boeuf avec un très faible rendement.
L'utilisation de CO₂ implique des coûts relativement élevés. De plus, si les conditions d'extraction sont telles que les acides gras libres à longue chaîne sont absents dans le concentré d'arômes extrait, l'extraction est effectuée à un très faible rendement.

Par ailleurs, il est connu d'utiliser des fluorocarbones comme solvant d'extraction pour extraire certains composés.

Ainsi, EP 616, 821 décrit l'utilisation de 1,1,1,2 tetrafluoroéthane pour l'extraction d'arômes de parfums de fleurs, de composés de racines, de graines ou d'algues.

Les procédés connus d'isolation d'arômes de matière grasse ne permettent pas l'isolation, à partir de matière grasse oxydée, d'arômes stables présentant de bonnes qualités organoleptiques. En effet, ces procédés impliquent l'isolation d'arômes en association notamment avec des lipides oxydables et des peroxydes en concentration élevée. Par ailleurs, les acides gras insaturés, en particulier sous forme libres, sont les précurseurs principaux des peroxydes qui sont responsables de l'instabilité des matières grasses. De plus, dans les procédés connus, une grande partie des arômes volatils ne sont pas isolés.

La présente invention a pour but de proposer un concentré d'arômes volatils extrait de matière grasse qui reste stable ainsi que le procédé d'extraction d'un tel concentré.

A cet effet, la présente invention a pour objet un concentré d'arômes volatils extrait de matière grasse qui contient, par rapport à la quantité contenue dans la matière grasse de départ, au maximum 5% d'acides gras libres ayant une chaine carbonée supérieure ou égale à 14 carbones et au maximum 1% d'oxygène sous forme de péroxyde.

On a constaté avec surprise que le concentré d'arômes volatils selon l'invention est stable du fait qu'il contient, en faible quantité, des peroxydes et des acides gras libres ayant une chaine carbonée supérieure ou égale à 14 carbones. Il est connu que les acides gras à longue chaîne carbonée s'oxydent facilement, surtout lorsqu'ils sont sous forme libre, et provoquent donc une instabilité lors du stockage. Aussi, il est très avantageux d'obtenir un concentré d'arômes volatils ne contenant des acides gras libres à longue chaine carbonée qu'en faible proportion. Par ailleurs, le concentré d'arômes volatils selon l'invention, extrait de matière grasse animale, est pauvre en cholesterol, ce qui lui confère de très bonnes qualités nutritives. Enfin, le concentré d'arômes volatils selon l'invention présente de très bonnes propriétés aromatiques.

La matière grasse à partir de laquelle le concentré d'arômes est extrait peut être d'origine animale ou végétale et peut être sous forme de graisse ou d'huile.

Lorsque le concentré d'arômes volatils est extrait à partir de matière grasse d'origine animale, il présente au maximum 5% de cholestérol par rapport à la quantité de cholestérol de la matière grasse de départ. Ceci confère au concentré d'arômes volatils de très bonnes qualités nutrtives.

Le concentré d'arômes volatils selon l'invention est extrait de la matière grasse a l'aide d'un fluorocarbone et, de préférence, le 1,1,1,2 tetrafluoroéthane.
De préférence, on utilise le 1,1,1,2 tetrafluoroéthane sous forme liquide, de manière à ne pas dissoudre les lipides tels que les acides gras libres, les triglycérides et les phospholipides.

La présente invention concerne également un procédé de fabrication d'un concentré d'arômes volatils, dans lequel on effectue sur la matière grasse une extraction sous pression à une température de 10-30° C, à l'aide d'un solvant d'extraction, le 1,1,1,2 tetrafluoroéthane, de manière à isoler un concentré d'arômes volatils.

De manière à abaisser la valeur du point de fusion de la matière grasse de départ, on peut ajouter lors de l'extraction des graisses ou des huiles ayant un point de fusion dont la valeur est plus basse que celle de la matière grasse de départ. A cet effet, on peut notamment ajouter des MCT, des triglycerides à chaîne moyenne.

On peut effectuer 2-5 cycles d'extraction sur la matière grasse de départ, de manière à obtenir un concentré d'arômes volatils enrichi.

On peut effectuer l'extraction dans une colonne d'extraction à contre-courant. On introduit alors par le haut de la colonne le solvant d'extraction et par le bas de la colonne la matière grasse de départ sous forme liquide. On peut ainsi recueillir en fin d'extraction, par le bas de la colonne, le concentré d'arômes volatils extrait et, par le haut de la colonne, la matière grasse épuisée contenant le solvant d'extraction. Le solvant d'extraction peut être récupéré par distillation et utilisé pour une nouvelle extraction.

On peut effectuer l'extraction sur la matière grasse dans un rapport pondéral matière grasse/ solvant d'extraction de 0,2 à 5.

Le concentré d'arômes volatils selon l'invention peut être avantageusement utilisé pour la fabrication de produits alimentaires. En effet, on peut utiliser ce concentré pour donner une note aromatique grasse à un produit alimentaire sans en augmenter son contenu en lipides. On peut ainsi obtenir un produit alimentaire ayant une très bonne stabilité et d'excellentes propriétés nutritives.

On peut aromatiser des substituts de graisses, de la mayonnaise, de la margarine, des crèmes-glacées, des produits de boulangerie, des sauces, des soupes et/ou des snacks, par exemple.

Le concentré d'arômes volatiles selon l'invention, le procédé de fabrication de ce concentré ainsi que son utilisation sont décrits plus en détails à l'aide des exemples non limitatifs ci-après. Les pourcentages sont donnés en poids, sauf indication contraire.

### Exemple 1

On effectue l'extraction d'un concentré d'arômes volatils à partir d'huile d'olives.

Pour ce faire, on effectue une extraction en présence de 3 kg de solvant d'extraction, le 1,1,1,2 tetrafluoroéthane, pour 1 kg d'huile d'olives à une température de 30° C et une pression de 7,7 bar. On ajoute donc 3 kg de 1,1,1,2 tetrafluoroéthane à 1kg d'huile d'olives sous agitation puis on laisse reposer, de manière à obtenir une séparation de la phase constituée par l'huile d'olives et celle contenant le solvant d'extraction et le concentré d'arômes volatils.

Puis, on transfère la phase contenant le solvant d'extraction et le concentré d'arômes volatils dans une cuve d'évaporation contenant 100 g de support d'extraction, du MCT, commercialisé par IMPAG chimi import A.G, Feldeggstrasse 26, CH ― 8034 Zurich.

On récupère ainsi le concentré d'arômes volatils sur le support d'extraction et le solvant d'extraction, le 1,1,1,2 tetrafluoroéthane est alors distillé à une température inférieure à 15° C et liquéfié à l'aide d'un compresseur de manière à pouvoir recycler le solvant d'extraction pour une nouvelle extraction.

On renouvelle l'extraction de concentré d'arômes volatils sur les 3 kg d'huile d'olives telle que décrite ci-dessus 2 fois.

On mesure la concentration de péroxyde contenue dans l'huile d'olive, avant et après le procédé d'extraction, dans le support d'extraction ainsi que dans le concentré d'arômes volatils. L'ensemble des valeurs sont mentionnées dans le tableau I ci-après. La quantité de péroxyde dans le tableau I est donnée en mmol O₂ /kg de matière. Il s'agit de la concentration d'oxygène lié sous forme de péroxyde par kilogramme de matière.

**Tableau I**

| | concentration en péroxyde (mmol O₂ /kg de matière) |
|---|---|
| huile d'olives avant extraction | 14,5 |
| huile d'olives après extraction | 14,5 |
| MCT | < 0,4 |
| concentré d'arômes volatils sur MCT | < 0,4 |

Les mesures mentionnées au tableau I mettent en évidence le fait que le concentré d'arômes volatils ainsi isolé à partir d'huile d'olives contient une faible quantité de péroxydes par rapport à la quantité contenue dans l'huile de départ, l'huile d'olives. On a donc 14,5 mmol d'oxygène lié sous forme de peroxyde dans l'huile d'olives de départ et 0,04 mmol d'oxygène lié sous forme de peroxyde dans le concentré d'arômes volatils. Ainsi le rendement d'extraction du peroxyde lors de l'extraction est inférieur à 0,3%.

On obtient ainsi un concentré d'arômes volatils présentant les qualités organoleptiques souhaitées et ayant un arôme de graisse typique d'huile d'olives.

### Exemple 2

On effectue l'extraction d'un concentré d'arômes volatils à partir de graisse de poule.

Pour ce faire, on effectue une extraction en présence de 3 kg de solvant d'extraction, le 1,1,1,2 tetrafluoroéthane pour 600 gr de graisse de poule non rafinée, commercialisée par Saria Industries, 77 rue Charles Michels, BP 230, F ― 93523 SAINT DENIS . On effectue cette extraction à une température de 30° C et une pression de 7,7 bar. On ajoute donc aux 600 gr de graisse de poule non rafinée 3 kg de 1,1,1,2 tetrafluoroéthane sous agitation puis l'on laisse reposer, de manière à obtenir une séparation de la phase constituée par la graisse de poule et de celle contenant le solvant d'extraction et le concentré d'arômes volatiles.

Puis, on transfère la phase contenant le solvant d'extraction et les arômes volatils concentrés dans une cuve d'évaporation contenant 60 gr de support d'extraction, de l'huile de tournesol, commercialisée par Elchem Continental S.A, Avenue du Clairevaux 15, BE - Louvain La Neuve.

On récupère ainsi le concentré d'arômes volatils sur le support d'extraction et le solvant d'extraction, le 1,1,1,2 tetrafluoroéthane est alors distillé à une température inférieure à 15° C et liquéfié de manière à pouvoir recycler le solvant d'extraction pour une nouvelle extraction.

On renouvelle l'extraction de concentré d'arômes volatils sur les 600 gr de graisse de poule telle que décrite ci-dessus 2 fois.

On mesure le pourcentage d'acides gras libres à longue chaîne carbonée (C₁₆ ― C₁₈) contenue dans la graisse de poule, avant et après le procédé d'extraction, dans le support d'extraction ainsi que dans le concentré d'arômes volatils. L'ensemble des valeurs est mentionnés dans le tableau II ci-après.

**Tableau II**

| | acides gras libres à longue chaîne de carbone (C₁₆ ― C₁₈) (%) |
|---|---|
| graisse de poule avant l'extraction | 4 |
| graisse de poule après extraction | 4,4 |
| support d'extraction | < 0,2 |
| concentré d'arômes volatils | 1,9 |

Les résultats mentionnés au tableau II mettent en évidence le fait que le concentré d'arômes volatils ainsi extrait contient des acides gras libres à longue chaine carbonée en faible quantité. On a donc 24 gr d'acides gras libres à longue chaîne de carbone dans la graisse de poule de départ et 1,14 gr dans le concentré d'arômes volatils. Ainsi, lors du procédé d'extraction, les acides gras libres à longue chaîne de carbone sont extraits à un faible rendement d'extraction de 4,75%.

On obtient ainsi un concentré d'arômes volatils présentant de très bonnes qualités organoleptiques et ayant un arôme de graisse de poule caractéristique.

### Exemple 3

On effectue l'extraction d'un concentré d'arômes volatils à partir de graisse de canard.

Pour ce faire, on effectue une extraction en présence de 3 kg de solvant d'extraction, le 1,1,1,2 tetrafluoroéthane, pour 400 gr de graisse de canard, commercialisée par SPI Diana, France. On ajoute donc aux 400 gr de graisse de canard 3 kg de 1,1,1,2 tetrafluoroéthane sous agitation puis on laisse reposer, de manière à obtenir une séparation de la phase constituée par la graisse de canard et de celle contenant le solvant d'extraction et le concentré d'arômes volatils.

Puis, on transfère la phase contenant le solvant d'extraction et le concentré d'arômes volatils dans une cuve d'évaporation contenant 40 gr de support d'extraction, du MCT, commercialisé par IMPAG, Feldeggstrasse 26, CH ― 8008 ZURICH.

On récupère ainsi le concentré d'arômes volatils sur le support d'extraction et le solvant d'extraction, le 1,1,1,2 tetrafluoroéthane est alors distillé à une température inférieure à 15° C et liquéfié à l'aide d'un compresseur de manière à pouvoir recycler le solvant d'extraction pour une nouvelle extraction.

On renouvelle l'extraction de concentré d'arômes volatils sur les 400 gr de graisse de canard telle que décrite ci-dessus 2 fois.

On mesure la quantité de cholesterol contenue dans la graisse de canard, avant et après le procédé d'extraction, dans le support d'extraction ainsi que dans le concentré d'arômes volatils. L'ensemble des valeurs sont mentionnées dans le tableau III ci-après.

**Tableau III**

| | concentration en cholesterol (%) |
|---|---|
| graisse de canard avant extraction | 0,19 |
| graisse de canard après extraction | 0,19 |
| support d'extraction | < 0,01 |
| concentré d'arômes volatils | 0,07 |

Les résultats mentionnés au tableau III mettent en évidence le fait que le cholesterol n'est extait qu'à un rendement faible rendement. En effet, la graisse de canard de départ contient 0,76 gr de cholestérol et le concentré d'arômes volatils ainsi extrait contient 0,028 gr de cholestérol. On obtient ainsi un rendement d'extraction du cholestérol de 3,7%.

### Exemple 4

On effectue l'extraction d'un concentré d'arômes volatils à partir d'huile de tournesol oxydée.

Pour oxyder l'huile de tournesol, on met sous agitation un mélange de 10 kg d'huile de tournesol, 2,5 kg d'eau et 0,4 kg de sel dans un réacteur à 105 °C pendant 16 heures. Après oxydation, on obtient une séparation entre la phase aqueuse et la phase lipidique constituée par l'huile de tournesol. On utilise alors l'huile de tournesol oxydée pour l'extraction.

On effectue l'extraction en présence de 3 kg de solvant d'extraction, le 1,1,1,2 tetrafluoroéthane, pour 1 kg d'huile de tournesol oxydée à une température de 20° C et une pression de 5,7 bar. On ajoute donc à 1kg d'huile de tournesol oxydée 3 kg de 1,1,1,2 tetrafluoroéthane sous agitation puis on laisse reposer, de manière à obtenir une séparation de la phase constituée par l'huile de tournesol oxydée et de celle contenant le solvant d'extraction et le concentré d'arômes volatils.

Puis, on transfère la phase contenant le solvant d'extraction et le concentré d'arômes volatils dans une cuve d'évaporation contenant 100 gr de support d'extraction, du MCT, commercialisé par IMPAG, Suisse.

On récupère ainsi le concentré d'arômes volatils sur le support d'extraction. On distille le solvant d'extraction à une température inférieure à 15° C et on le liquéfie à l'aide d'un compresseur, de manière à pouvoir le recycler pour une nouvelle extraction. On renouvelle l'extraction de concentré d'arômes volatiles sur les 3 kg d'huile de tournesol telle que décrite ci-dessus 2 fois.

On mesure la concentration de péroxyde contenue dans l'huile de tournesol, avant et après le procédé d'oxydation et avant et après le procédé d'extraction, dans le support d'extraction ainsi que dans le concentré d'arômes volatiles. L'ensemble des valeurs sont mentionnées dans le tableau IV ci-après. La quantité de péroxyde dans le tableau IV est donnée en mmol O₂ /kg de matière. Il s'agit de la concentration d'oxygène liée sous forme de péroxyde par kilogramme de matière.

**Tableau IV**

| | concentration en péroxyde (mmol O₂ /kg) |
|---|---|
| huile de tournesol avant extraction | 1,0 |
| huile de tournesol oxydée avant extraction | 8,5 |
| huile de tournesol oxydée après extraction | 9,6 |
| MCT | < 0,4 |
| Concentré d'arômes volatils | 0,7 |

Les mesures mentionnées au tableau IV mettent en évidence le fait que le concentré d'arômes volatils ainsi isolé à partir d'huile de tournesol oxydée contient une faible quantité de péroxydes par rapport à la quantité contenue dans l'huile de tournesol de départ. On a donc 8,5 mmol d'oxygène lié sous forme de peroxyde dans l'huile d'olives de départ et 0,07 mmol d'oxygène lié sous forme de peroxyde dans le concentré d'arômes volatils. Ainsi le rendement d'extraction du peroxyde lors de l'extraction est inférieur à 0,8%.

On ajoute à un échantillon de concentré d'arômes volatils sur MCT 0,1% de l'antioxydant Herbor 025, commercialisé par Food Ingredients Specialities, CH ― Châtel Saint Denis. Puis on effectue un test de stabilité au stockage.
Pour ce faire, on stocke à 20° C un échantillon d'huile de tournesol non-oxydée, un échantillon d'huile de tournesol oxydée, un échantillon d'huile de tournesol oxydée après extraction, un échantillon du concentré d'arômes volatils sur MCT et un échantillon du concentré d'arômes volatils sur MCT avec 0,1% d'antioxydant Herbor 025.
On stocke également les mêmes types d'échantillons à 37° C.

On mesure alors la concentration en péroxyde contenue dans ces différents échantillons avant le stockage, après 4 semaines puis après 8 semaines. L'ensemble des valeurs sont mentionnées dans le tableau V ci-après.

**Tableau V**

| | concentration en péroxyde (mmol O₂ /kg) | | | | |
|---|---|---|---|---|---|
| | avant stockage | 20 °C 4 sem. | 20 °C 8 sem. | 37 °C 4 sem. | 37 °C 8 sem. |
| huile de tournesol non-oxydée | 1,0 | 0,9 | 18,6 | 15,4 | 26,9 |
| Huile de tournesol oxydée | 8,5 | 19,7 | 35,3 | 13,5 | 21,5 |
| Concentré d'arômes volatiles | 0,7 | 1,7 | 6,3 | 6,4 | 6,8 |
| Concentré d'arômes volatils + 0,1% d'antioxydant | 0,7 | 0,4 | 3,2 | 1,4 | 2,1 |

Les résultats mentionnés au tableau V mettent en évidence le fait que le concentré d'arômes volatils sur MCT ainsi que le concentré d'arômes volatils avec l'addition de 0,1% d'antioxydant sont beaucoup plus stables que l'huile de tournesol de départ ainsi que l'huile de tournesol oxydée. Si la concentration en péroxyde est inférieure ou égale à 6 mmol O₂ /kg, on considère que les qualités oxydatives sont bonnes lors du stockage. Par contre, si la concentration en péroxyde est supérieure à 10 mmol O₂ /kg, on considère que l'on est en présence d'un produit présentant de mauvaises qualités oxydatives.

### Exemple 5

On prépare un bouillon de volaille contenant de l'extrait d'arômes volatils sur MCT tel que réalisé à l'exemple 3.

Pour ce faire, on prépare un mélange contenant 378 g de maltodextrine, 190 g de sel, 100 g d'extrait de levure, 91 g de dextrose, 80 g d'amidon, 13 g de concentré d'arôme volatils sur MCT, 36 g de sucre, 0,5 g de couleur caramel, 2,5 g de curcuma, 2 g d'acide citrique, 1 g de poivre, 0,5 g d'ail, 0,5 g de romarin, 0,5 g de gingembre.

On prépare alors le bouillon à partir de 1 l d'eau chaude dans lequel on mélange 19 g du mélange et 1,2 g sel.

Le bouillon réalisé avec l'extrait d'arômes volatils présente un arôme de volaille très prononcé.

## Revendications

1. Concentré d'arômes volatils extrait de matière grasse, caractérisé par le fait qu'il contient, par rapport à la quantité contenue dans la matière grasse de départ, au maximum 5% d'acides gras libres ayant une chaîne carbonée supérieure ou égale à 14 carbones et au maximum 1% de péroxyde.

2. Concentré selon la revendication 1, caractérisé par le fait qu'il est extrait à l'aide d'un fluorocarbone, de préférence le 1,1,1,2 tetrafluoroéthane.

3. Concentré selon les revendications 1 et 2, caractérisé par le fait qu'il contient par rapport à la quantité contenue dans la matière grasse d'origine animale de départ, au maximum 5% de cholestérol.

4. Procédé de fabrication d'un concentré selon les revendications 1 à 3, dans lequel on effectue une extraction à une température de 10-30° C et une pression de 4,1-7,7 bar sur de la matière grasse à l'aide d'un solvant d'extraction, le 1,1,1,2 tetrafluoroéthane, de manière à isoler un concentré d'arômes volatils.

5. Procédé selon la revendication 4, dans lequel la matière grasse est d'origine animale ou végétale.

6. Procédé selon les revendications 4 et 5, dans lequel on effectue l'extraction dans une colonne d'extraction à contre-courant.

7. Procédé selon les revendications 4 à 6, dans lequel on effectue l'extraction sur la matière grasse dans un rapport pondéral matière grasse / solvant d'extraction de 0,5 à 2.

8. Utilisation du concentré selon les revendications 1 à 3 pour la fabrication de produits alimentaires.
